# EUROPÄISCHE PATENTSCHRIFT

(11) **EP 1 234 125 B1**
(45) Veröffentlichungstag und Bekanntmachung des Hinweises auf die Patenterteilung: **01.09.2004**
(21) Anmeldenummer: 00987138.5
(22) Anmeldetag: 16.11.2000
(51) Int. Cl.: F16H 1/14, F16H 57/02

(54) **WINKELGETRIEBE**
ANGULAR GEAR
ENGRENAGE ANGULAIRE

(30) Priorität: 01.12.1999 DE 19957743
(43) Veröffentlichungstag der Anmeldung: 28.08.2002
(60) Teilanmeldung: 03026839.5
(73) Patentinhaber: GRAESSNER GmbH & Co. KG THE GEAR COMPANY, 72135 Dettenhausen (DE)
(72) Erfinder: HOFFMANN, Hartmut, 71088 Holzgerlingen (DE)
(74) Vertreter: Patentanwälte Rüger, Barthelt & Abel
(86) Internationale Anmeldenummer: PCT/DE2000/004031
(87) Internationale Veröffentlichungsnummer: WO 2001/040677

(56) Entgegenhaltungen:
- WO-A-93/22584
- DE-A- 2 752 979
- DE-A- 2 944 398
- DE-A- 3 619 561
- DE-A- 3 620 003
- NL-A- 8 700 651
- US-A- 1 956 237
- US-A- 4 020 715

## Beschreibung

Winkelgetriebe werden benötigt, wenn eine drehende Bewegung in eine andere drehende Bewegung umgesetzt werden soll, wobei die Drehachsen zueinander im Winkel verlaufen. Anwendungsbereiche hierfür sind Werkzeugmaschinen, Verpackungsmaschinen und dergleichen. Dabei werden unterschiedliche Anforderungen an die Genauigkeit gestellt, mit der die Winkelbewegung der Ausgangswelle der Winkelbewegung der Eingangswelle folgt.

Um eine hinreichende Genauigkeit und auch eine ausreichende Lebensdauer zu erreichen, müssen die Achsen der Wellen zueinander sehr genau eingestellt werden und diese Einstellung auch über lange Zeit beibehalten. Insbesondere muss der theoretische Winkel zwischen den Wellen, der der Berechnung der Zahngeometrie zu Grunde liegt, auch genau mit dem tatsächlichen Winkel übereinstimmen. In der Praxis hat man deswegen in der Vergangenheit Getriebegehäuse verwendet, die als Gussteil hergestellt sind und von vielen Seiten sehr genau bearbeitet werden müssen. Dies gilt sowohl für das Hauptgehäuse, in dem im Allgemeinen die Ausgangswelle sowie beide Zahnräder des Winkelgetriebes untergebracht sind, als auch für das Hilfs- oder Seitengehäuse, in dem die Eingangswelle drehbar gelagert ist.

Ferner geht das Bestreben der Konstrukteure dahin, derartige Winkelgetriebe möglichst klein und kostengünstig herzustellen.

Aus der WO 93/22584 ist dementsprechend ein Winkelgetriebe bekannt, das aus zwei Gehäuseteilen besteht. Der eine Gehäuseteil ist ein Abschnitt eines Strangpressprofils mit in Längsrichtung eingeformten T-Nuten zur Befestigung des Winkelgetriebes an einem Gerät. Durch diesen Gehäuseteil führt eine Bohrung hindurch, die an beiden Enden bearbeitet ist, um Anlageschultern für Rillenkugellager zur Lagerung der Ausgangswelle zu erzeugen. Die Ausgangswelle selbst besteht aus einer rohrförmigen Achse, an die einstückig ein Kegelrad angeformt ist.

Das damit kämmende Ritzel sitzt drehfest.an einer Welle, die in einem zweiten Gehäuseteil drehbar gelagert ist. Das zweite Gehäuseteil ist mit dem ersten Gehäuseteil verschraubt.

Ausgehend hiervon ist es Aufgabe der Erfindung ein Winkelgetriebe zu schaffen, dass in der Herstellung kostengünstiger ist und einen geringeren Raumbedarf aufweist.

Diese Aufgabe wird erfindungsgemäß durch das Winkelgetriebe mit den Merkmalen des Anspruches 1 gelöst.

Die neue Konstruktion geht von der Erkenntnis aus, dass Strangpressteile heute mit solch einer Genauigkeit produzierte werden können, dass die geforderten Toleranzen für Winkelgetriebe leicht eingehalten werden können ohne umfangreiche spangebende Bearbeitung zu erfordern.

Bei dem neuen Winkelgetriebe wird das Gehäuse aus einem Abschnitt eines Strangpressprofils hergestellt, so dass die wesentlichen Konstruktions- und Befestigungselemente für das Getriebe bereits beim Strangpressen vorgegeben werden, wie beispielsweise der Innenraum, in dem die Ausgangswelle gelagert ist als auch die erforderlichen Nuten zum Befestigen des Winkelgetriebes. Es genügt in aller Regel, wenn die Lagersitze in dem Strangpressabschnitt beispielsweise durch Rollieren oder Walzen spanlos nachgearbeitet werden, um die erforderliche Passung zur Aufnahme der Wälzlager zu erzielen. Gelegentlich kann die Passung auch durch Feinbohren oder Ausspindeln erzeugt werde. Abgesehen von einem Überarbeiten der Stirnseiten und einem Einarbeiten von Sprengringnuten ist es nur noch erforderliche die seitliche Bohrung anzubringen, an der das zweite Gehäuseteil angeflanscht ist und durch die die Eingangswelle in das erste Gehäuseteil hineinragt.

Das Kegelrad der ersten Welle weist einen rohrförmigen Fortsatz auf, mit dem es auf der ersten Welle reibschlüssig sitzt. Hierdurch werden Profilveränderungen der Verzahnung vermieden, insbesondere dann, wenn das Kegelrad auf die Welle aufgeschrumpft ist. Durchmesserveränderungen beim Aufschrumpfen können nicht auf die Verzahnung übertragen werden.

Weil die erste Welle mit Hilfe des rohrförmigen Fortsatzes in einem zugehörigen Lager gelagert ist, wird für den Fortsatz kein zusätzlicher Raum benötigt.

Verglichen mit den bekannten Winkelgetrieben verbilligt sich die Herstellung des Getriebegehäuses sehr wesentlich, das einen nennenswerten Kostenfaktor bei der Herstellung des gesamten Winkelgetriebes ausmacht.

Im einfachsten Falle ist der Innenraum des ersten Gehäuseteils über den größten Teil seiner Längserstreckung zylindrisch mit konstantem Durchmesser.

Zum Halten der erforderlichen Wälzlager für die betreffende Welle genügen Sprengringnuten, die in einfacher Weise in den Sprangpressprofilabschnitt bei der Herstellung des Gehäuses eingestochen werden können.

Da das erste Gehäuseteil aus einem Abschnitt eines Strangpressprofils besteht, hat es über seine Länge gesehen parallel zur Längserstreckung des Innenraums einen konstanten Querschnitt, der sich aus dem Querschnitt des Strangpressprofils ergibt. Für die Befestigung des Winkelgetriebes in der betreffenden Maschine ist es von Vorteil, wenn der Querschnitt des Gehäuses gesehen rechtwinkelig zu der Längsachse des Innenraums im wesentlichen quadratisch ist. Hierdurch wird auch eine unnötige Materialvergeudung vermieden.

Das erste Gehäuseteil ist wenigstens an einer Seite eben, um das Anbringen des zweiten Gehäuseteils zu vereinfachen.

Zweckmäßiger Weise enthält das erste Gehäuseteil wenigstens eine hinterschnittene Nut, z.B. eine T-Nut, die sich an der Außenseite des ersten Gehäuseteils erstreckt und in Richtung parallel zu der Längsachse des Innenraums verläuft.

Bei einem Low-Cost-Winkelgetriebe genügt es, wenn die erste Welle mittels Rillenkugellagern gelagert ist. Hierdurch erübrigen sich komplizierte Einstellmaßnahmen und die weit von einander entfernten Rillenkugellager sind ohne weiteres in der Lage ohne Lebensdauerverkürzung eventuell auftretende einseitige Kippkräfte auszuhalten. Außer dem können sie bei entsprechender Gestaltung zusätzliche Dichtungen überflüssig machen.

Aus Gewichtsgründen ist es von Vorteil, wenn die erste Welle eine Hohlwelle ist.

Wenn das erfindungsgemäße Winkelgetriebe an Maschinenbauteile angeflanscht werden soll, ist es günstig, wenn wenigstens eine Stirnseite Befestigungsbohrungen enthält. Diese Befestigungsbohrungen können als zylindrische Hohlräume bereits in das Stranpressprofil eingearbeitet sein.

Wenn das zweite Gehäuseteil mit dem ersten Gehäuseteil über Passmittel verbunden ist, wird verhindert, dass Relativbewegungen bei der Belastung des Winkelgetriebes auftreten, die zu einer Veränderungen des Tragbildes an den Zahnrädern führen könnte.

Das Passmittel wird im einfachsten Falle von einem Außenlagerring eines Wälzlagers gebildet, mit dessen Hilfe die zweite Welle des Winkelgetriebes gelagert ist. Dieses Wälzlager ist vorteilhafter Weise ein Kegelrollenlager.

Das Kegelgetriebe kann sowohl gerade als auch bogenverzahnt sein. Das Kegelrad der zweiten Welle kann ein Ritzel sein und die Achsen der beiden Wellen können sowohl in einer gemeinsamen Ebene liegen als auch gegeneinander versetzt sein.

In der Zeichnung ist ein Ausführungsbeispiel des Gegenstandes der Erfindung dargestellt. Es zeigen:
Fig. 1 das erfindungsgemäße Winkelgetriebe in einer perspektivischen Darstellung und
Fig. 2 das Winkelgetriebe nach Fig. 1, geschnitten längs einer Ebene, die die Achsen der beiden Wellen enthält.

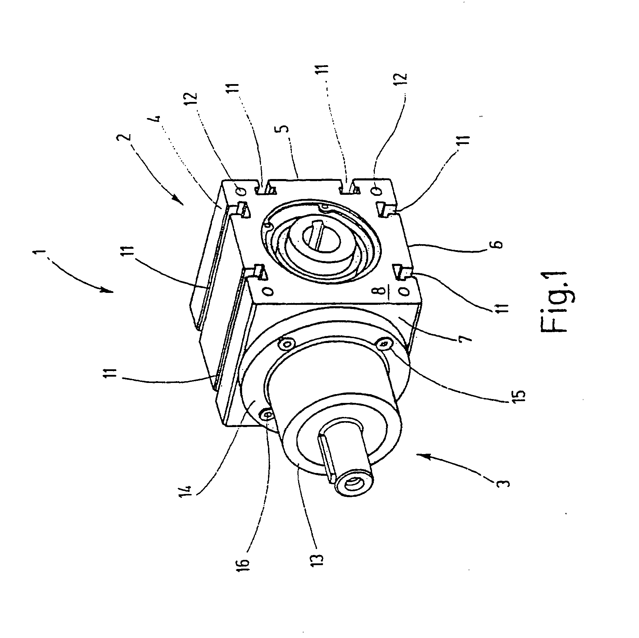

Ein in Fig. 1 gezeigtes Winkelgetriebe 1 setzt sich aus einem ersten oder Hauptgehäuseteil 2 sowie einem zweiten Gehäuseteil 3 zusammen. Der erste Gehäuseteil 1 ist etwa quader- oder würfelförmig und wir von vier Seitenwänden 4, 5, 6 und 7 sowie zwei Stirnwänden 8 und 9 begrenzt.

In den Seitenwänden 4, 5 und 6 befinden sich jeweils zwei von der Stirnseite 8 bis zu der Stirnseite 9 reichende T-Nuten, und außerdem enthält jede der Stirnseiten 8 und 9 jeweils vier Gewindebohrungen 12, die im Bereich der Ecken wie gezeigt angebracht sind. Die Achsen der T-Nuten 11 sowie die Achsen der Gewindebohrungen 12 sind zueinander parallel und parallel zu einer Achse des Gehäuseteils 2, die auf den Stirnseiten 8 und 9 senkrecht steht.

An der Seitenwand 7 ist der zweite einstückige Gehäuseteil 3 angeflanscht, der sich aus einem zylindrischen Abschnitt 13 sowie einem radial davon wegstehenden Flansch 14 zusammensetzt. In dem Flansch 14 sind insgesamt vier Stufenbohrungen 15 enthalten, in denen Befestigungsschrauben 16 sitzen, die in entsprechende Gewindebohrungen in der Seitenwand 7 eingeschraubt sind, um den zweiten Gehäuseteil 3 an der Seitenwand 7 festzuhalten.

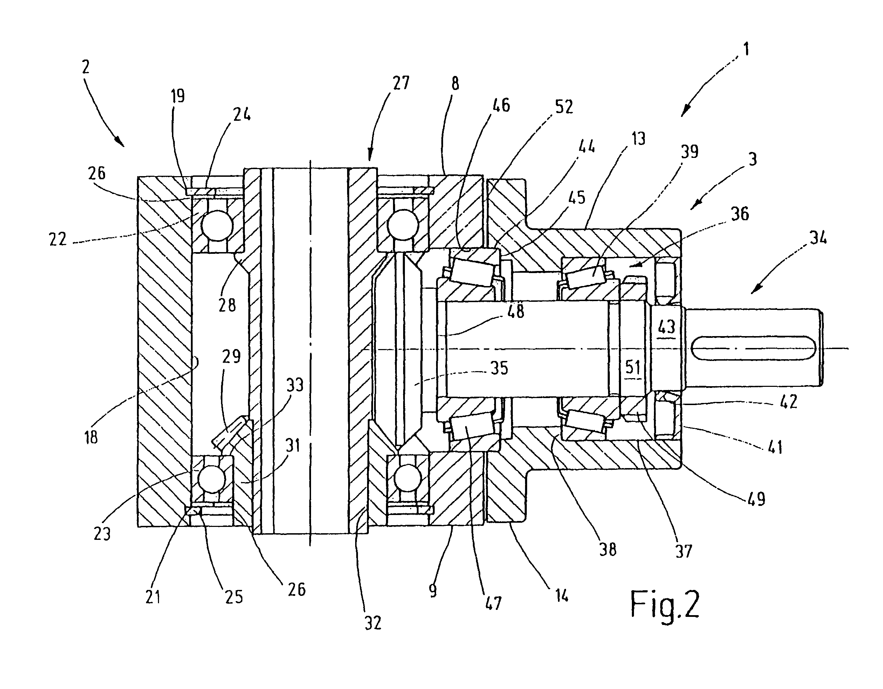

Das erste Gehäuseteil 2, dessen innere Gestalt sich aus Fig. 2 ergibt, ist ein Abschnitt eines Strangpressprofils beispielsweise aus Leichtmetall. Die Strangpressrichtung ist parallel zu den T-Nuten 11, so dass diese bereits beim Herstellen des Strangpressprofils mit eingeformt werden. Auch die Kernlöcher der Gewindebohrungen 12 können beim Erzeugen des Strangpressprofils, von dem der Gehäuseteil 2 abgelängt ist, mit eingeformt werden.

Ferner enthält das Gehäuseteil 2, wie Fig. 2 erkennen läßt, einen Innenraum 18 in Gestalt einer zylindrischen Durchgangsöffnung, die im wesentlichen ohne Querschnittsveränderung von der Stirnseite 8 bis zu der Stirnseite 9 reicht. Auch diese Durchgangsöffnung 18 ist bereits in dem Strangpressprofil enthalten, das als Hohlprofil hergestellt wird.

Der Querschnitt des Strangpressprofils ist die Ansicht auf die Stirnseite 8 oder 9.

Unmittelbar im Anschluss an die Stirnseiten 8 und 9 enthält der Innenraum 18 zwei eingestochene Sprengringnuten 19 und 21. Sie dienen als Axialsicherung für zwei zur Gehäusemitte angeordnete Rillenkugellager 22 und 23, deren Außenlagerring jeweils unmittelbar in dem zylindrischen Innenraum 18 sitzt. Die Rillenkugellager sind wenigstens einseitig nach Außen abgedichtet und lebendsdauergeschmiert. Weitere Wellendichtungen sind nicht vorhanden.

Die Lagersitze der beiden Rillenkugellager 22 und 23 in dem Innenraum 18 sind beispielsweise durch Walzen kalibriert und gleichzeitig verfestigt. Zwischen jedem Rillenkugellager 22 und 23 und dem zugehörigen Sprengring 24 und 25 sitzt jeweils noch eine Ausgleichsscheibe 26.

Mit Hilfe der Rillenkugellager 22 und 23 ist in dem ersten Gehäuseteil 2 eine rohrförmige Welle 27 drehbar gelagert.

Die Welle 27 trägt neben der Stirnseite 8 eine Radialschulter 28 mit der sie sich an dem Rillenkugellager 22 abstützt. Das gegenüberliegende Ende der Welle 27 ist etwas verjüngt und trägt reibschlüssig ein Kegelzahnrad 29. Das Kegelzahnrad 29 ist mit einem rohrförmigen Fortsatz 31 versehen, der auf einen verjüngten Abschnitt 32 der Welle 27 aufgeschrumpft ist. Die zylindrische Außenseite des rohrförmigen Fortsatzes 31 bildet den Sitz für das zweite Rillenkugellager 23 und außerdem stellt die Rückseite des Kegelzahnrades 29 eine Anlageschulter 33 dar, die sich gegen das Rillenkugellager 23 abstützt. Aufgrund des rohrförmigen Fortsatzes 31 werden Profilveränderungen der Verzahnung vermieden, die entstehen, wenn der rohrförmige Fortsatz 31 auf der Welle 27 aufgeschrumpft wird.

Das zweite Gehäuseteil 3 dient im wesentlichen der Lagerung einer Ritzelwelle 34, die an ihrem im Gehäuse innen liegenden Ende mit einem Ritzel 35 einstückig versehen ist, das mit dem Kegelzahnrad 29 kämmt.

Zur Lagerung der Ritzelwelle 34 enthält das zweite Gehäuseteil 3 eine Stufenbohrung 36, deren Achse rechtwinkelig an der Achse des Innenraums 18 verläuft. Die Achsen liegen in einer gemeinsamen Ebene, soweit es sich um ein normales Kegelgetriebe handelt. Sie können aber auch gegeneinander höhenversetzt sein, wenn das Ritzel 35 zusammen mit dem Kegelzahnrad 29 ein Hypoidgetriebe bildet.

Die Stufenbohrung 36 weist einen Abschnitt 37 mit größerem Durchmesser auf, der an einer planen Ringschulter 38 endet. Diese Ringschulter dient als Sitz für ein Kegelrollenlager 39.

Außerdem sitzt in diesem Abschnitt eine Simmerringdichtung 41, deren Dichtlippe 42 gegen einen entsprechenden zylindrischen Abschnitt 43 der Ritzelwelle 34 dichtend anliegt.

An denjenigen Ende des zweiten Gehäuseteils 3, der dem ersten Gehäuseteil 2 benachbart ist, geht die Stufenbohrung 36 in eine kurze Ausdrehung 44 über, die an einer Schulter 45 endet. Die Ausdrehung 44 hat denselben Durchmesser wie eine damit fluchtende seitliche Bohrung 46, die von der Seitenwand 7 bis in den Innenraum 18 reicht. In den miteinander fluchtenden Öffnungen, nämlich der Bohrung 46 und der Ausdrehung 44, steckt mit seinem Außenlagerring ein weiteres Kegelrollenlager 47. Auf diese Weise dient der Außenlagerring des Kegelrollenlagers 47 gleichzeitig als Passhülse, um das erste und das zweite Gehäuseteil 2, 3 lagerichtig zueinander zu fixieren, wobei die dezentrierenden Scherkräfte nicht über die Schrauben 16 übertragen werden müssen. Es läßt sich auf diese Weise eine sehr hohe Passgenauigkeit erzielen.

Die beiden Kegelrollenlager 39 und 47 sind in O-Anordnung eingebaut. Das innen liegende Kegelrollenlager 47 mit größerem Durchmesser liegt mit seinem Innenlagerring an einer Schulter 48 der Ritzelwelle 34 an. Die Vorspannung für die Kegelrollenlager 39 und 47 wird mittels einer Einstellmutter 49 erzielt, die auf ein Außengewinde 51 der Ritzelwelle 34 aufgeschraubt ist.

Die Herstellung und Montage des erfindungsgemäßen Winkelgetriebes 1 geschieht wie folgt:

Von einem Strangpressprofil aus Leichtmetall oder einem anderen geeigneten Material hinreichender Festigkeit wird ein Abschnitt mit der passenden Länge abgeschnitten. Je nach Qualität des erzeugten Schnitts werden damit bereits die endgültigen Stirnflächen 8 und 9 erhalten. Falls die Qualität nicht ausreichend ist, können die beiden Stirnflächen 8 und 9 mit geringem Materialabtrag nachgearbeitet werden. Sodann wird der Innenraum 18 zumindest im Bereich derjenigen Stellen, in denen später die beiden abgedichteten Rillenkugellager 22 und 23 sitzen, gewalzt, um den Durchmesser zu kalibrieren. Die Sprengringnuten 19 und 21 werden eingestochen.

In einer nächsten Bearbeitungsstufe werden die Bohrung 46 angebracht sowie die Gewindebohrungen erzeugt, die radial außerhalb der Bohrung 46 angeordnet sind, um die Befestigungsschrauben 16 für den Flansch 14 aufzunehmen.

Eine spangebende Bearbeitung der Seitenwand 7 ist ebensowenig erforderlich, wie an den übrigen Seitenwänden 4, 5 und 6.

Sodann wird die erste Welle 27, auf der bereits das Kegelrad 29 aufgeschrumpft ist zusammen mit dem Rillenkugellager 23, das auf dem rohrförmigen Fortsatz 31 steckt, von der Seite der Stirnfläche 9 her in den Innenraum 18 eingesteckt.

Das Kugellager 23 sitzt in dem Innenraum 18 mit Haftsitz.

Anschließend werden eine Distanzscheibe 26 eingelegt und der Sprengring 25 eingesetzt.

Nachdem die Welle 27 einends auf diese Weise gelagert ist, wird das andere Kugellager 22 von der entgegengesetzten Stirnseite 8 her auf die Welle 27 aufgesteckt und in den Innenraum 18 eingepresst, solang bis das Rillenkugellager 22 mit seinem Innenlagerring an der Schulter 28 anliegt. Es werden dann die Distanzscheiben 26 eingelegt und der Sprengring 24 eingesprengt.

Sind diese Vorarbeiten abgeschlossen, wird auf der Seitenwand 7 das mit den Kegelrollenlagern 39 und 47 und der Ritzelwelle 34 vormontierte zweite Gehäuseteil 3 aufgesetzt. Im Rahmen der Vormontage des zweiten Gehäuseteils 3 wird auch die Vorspannung der Kegelrollenlager 39 und 47 eingestellt.

Mit Hilfe von Ausgleichsscheiben 52, die zwischen dem Flansch 14 und der Seitenwand 7 liegen, wird während der Montage das Zahnflankenspiel und das Tragbild zwischen dem Ritzel 35 und dem Kegelrad 29 eingestellt. Nach Anziehen der Befestigungsschrauben 16 ist die Montage abgeschlossen.

Ersichtlicherweise sind an dem Gehäuseteil 1 nur sehr wenige spangebende Operationen erforderlich. Nach dem Ablängen des entsprechenden Abschnittes ist das erste Gehäuseteil 2 bereits weitgehend fertig. Verglichen mit gleich großen Winkelgetrieben in der klassischen Gussbauweise sind Einsparungen bei dem Herstellungsprozess für das erste und das zweite Gehäuseteil zusammen in Höhe zwischen 15 bis 40% abhängig von der Größe des gesamten Gehäuses möglich.

Ein Winkelgetriebe 1 setzt sich aus einem ersten und zweiten Gehäuseteil 2, 3 zusammen. Der erste Gehäuseteil 2 ist ein Abschnitt von einem Strangpressprofil. Auf diese Weise werden eine Vielzahl von spangebenden Bearbeitungsvorgängen, die bei Gussgehäusen erforderlich sind, entbehrlich.

## Patentansprüche

1. Winkelgetriebe (1)
mit einem ersten Gehäuseteil (2), das einen Innenraum (18) enthält sowie eine bezüglich des Innenraums (18) radial verlaufende seitlichen Bohrung (46) aufweist,
wobei das erste Gehäuseteil (2) aus einem Abschnitt eines Strangpressprofils mit Hohlquerschnitt besteht und der Innenraum (18) von dem Hohlraum gebildet ist, der beim Strangpressen eingeformt wird,
mit einer in dem Innenraum (18) drehbar gelagerten ersten Welle (27), auf der drehfest ein erstes Kegelzahnrad (29) sitzt, das einen rohrförmigen Fortsatz (31) aufweist, der auf der ersten Welle (27) reibschlüssig sitzt,
wobei die erste Welle (27) mit Hilfe des rohrförmigen Fortsatzes (31) in einem zugehörigen Lager (23) gelagert ist,
mit einem zweiten Gehäuseteil (3), der einen Innenraum (36) enthält und der an dem ersten Gehäuseteil (2) derart befestigt ist, dass sein Innenraum (36) mit der seitlichen Bohrung (46) des ersten Gehäuseteils (2) fluchtet, und
mit einer in dem zweiten Gehäuseteil (3) drehbar gelagerten zweiten Welle (34), die an ihrem in dem ersten Gehäuseteil (2) befindliche Ende drehfest ein zweites Kegelzahnrad (35) trägt, das mit dem ersten Kegelzahnrad (29) kämmend in Eingriff steht.

2. Winkelgetriebe nach Anspruch 1, **dadurch gekennzeichnet, dass** der Innenraum (18) des ersten Gehäuseteils (2) über den größten Teil seiner Längserstreckung zylindrisch ist.

3. Winkelgetriebe nach Anspruch 1, **dadurch gekennzeichnet, dass** an beiden stirnseitigen Enden (8,9) des ersten Gehäuseteils (2) in den Innenraum (18) Nuten (19,21) eingestochen sind zur Aufnahme von Sprengringen (24,25).

4. Winkelgetriebe nach Anspruch 1, **dadurch gekennzeichnet, dass** das erste Gehäuseteil (2) einen Querschnitt rechtwinkelig zu der Längsachse des Innenraums (18) aufweist, der zumindest angenähert rechteckig ist.

5. Winkelgetriebe nach Anspruch 1, **dadurch gekennzeichnet, dass** das erste Gehäuseteil (2) an wenigstens einer Seite (7) eben ist.

6. Winkelgetriebe nach Anspruch 1, **dadurch gekennzeichnet, dass** das erste Gehäuseteil (2) wenigstens eine hintergriffe Nut (11) enthält, die sich an einer Seitenwand (4,5,6) des ersten Gehäuseteils (2) erstreckt und die in Richtung parallel zu der Längsachse des Innenraums (18) verläuft.

7. Winkelgetriebe nach Anspruch 1, **dadurch gekennzeichnet, dass** die erste Welle (27) mittels Rillenkugellagern (22,23) gelagert ist.

8. Winkelgetriebe nach Anspruch 7, **dadurch gekennzeichnet, dass** die Rillenkugellager (22,23) abgedichtete dauergeschmierte Kugellager sind.

9. Winkelgetriebe nach Anspruch 8, **dadurch gekennzeichnet, dass** der Innenraum (18) des ersten Gehäuseteils (2) lediglich durch die Dichtungen der Lager (22,23) für die erste Welle (27) abgedichtet ist.

10. Winkelgetriebe nach Anspruch 1, **dadurch gekennzeichnet, dass** die erste Welle (27) eine Hohlwelle ist.

11. Winkelgetriebe nach Anspruch 1, **dadurch gekennzeichnet, dass** das erste Gehäuseteil (2) in wenigstens einer Stirnseite (8,9) Befestigungsbohrungen (12) enthält.

12. Winkelgetriebe nach Anspruch 1, **dadurch gekennzeichnet, dass** das erste Gehäuseteil (2) mit dem zweiten Gehäuseteil (3) über Passmittel (47) verbunden ist.

13. Winkelgetriebe nach Anspruch 12, **dadurch gekennzeichnet, dass** die Passmittel von einem Außenlagerring eines Wälzlagers (47) gebildet sind, mit dem die zweite Welle (34) in dem zweiten Gehäuseteil (3) drehbar gelagert ist.

14. Winkelgetriebe nach Anspruch 1, **dadurch gekennzeichnet, dass** das Kegelgetriebe (1) gerade- oder bogenverzahnt ist.

15. Winkelgetriebe nach Anspruch 1, **dadurch gekennzeichnet, dass** das Kegelrad (35) der zweiten Welle (34) ein Ritzel ist.

16. Winkelgetriebe nach Anspruch 1, **dadurch gekennzeichnet, dass** die erste und die zweite Welle (27,34) gegeneinander achsversetzt sind.

17. Winkelgetriebe nach Anspruch 1, **dadurch gekennzeichnet, dass** die Achse der ersten Welle (27) und die Achse der zweiten Welle (34) in einer gemeinsamen Ebene liegen.

18. Winkelgetriebe nach Anspruch 1, **dadurch gekennzeichnet, dass** die erste und die zweite Welle (27,34) einen Winkel von 90° miteinander einschließen.

## Claims

1. Angular gear (1)
with a first casing part (2), which contains an internal space (18) and also has a lateral bore (46) extending radially with respect to the internal space (18),
wherein the first casing part (2) comprises a section of an extruded profile with a hollow cross-section and the internal space (18) is formed by the cavity,
which is formed during the extrusion moulding,
with a first shaft (27), which is rotatably disposed in the internal space (18) and on which a first bevel gear wheel (29) sits in a manner fixed against rotation, said bevel gear wheel having a tubular continuation piece (31), which sits frictionally engaged on the first shaft (27),
wherein the first shaft (27) is supported in an associated bearing (23) by means of the tubular continuation piece (31),
with a second casing part (3), which contains an internal space (36) and is fastened on the first casing part (2) in such a manner that its internal space (36) is flush with the lateral bore (46) of the first casing part (2), and
with a second shaft (34), which is rotatably disposed in the second casing part (3) and which bears a second bevel gear wheel (35) on its end located in the first casing part (2) in a manner fixed against rotation, said second bevel gear wheel meshing with the first bevel gear wheel (29).

2. Angular gear according to Claim 1, **characterised in that** the internal space (18) of the first casing part (2) is cylindrical over the largest portion of its longitudinal extension.

3. Angular gear according to Claim 1, **characterised in that** grooves (19, 21) are machined at the two front ends (8, 9) of the first casing part (2) in the internal space (18) to receive snap rings (24, 25).

4. Angular gear according to Claim 1, **characterised in that** the first casing part (2) has a cross-section at right angles to the longitudinal axis of the internal space (18), which is at least approximately rectangular.

5. Angular gear according to Claim 1, **characterised in that** the first casing part (2) is plane on at least one side (7).

6. Angular gear according to Claim 1, **characterised in that** the first casing part (2) contains at least one undercut groove (11), which extends on a side wall (4, 5, 6) of the first casing part (2) and runs in parallel direction to the longitudinal axis of the internal space (18).

7. Angular gear according to Claim 1, **characterised in that** the first shaft (27) is supported by means of grooved ball bearings (22, 23).

8. Angular gear according to Claim 7, **characterised in that** the grooved ball bearings (22, 23) are sealed permanently lubricated ball bearings.

9. Angular gear according to Claim 8, **characterised in that** the internal space (18) of the first casing part (2) is only sealed by the seals of the bearings (22, 23) for the first shaft (27).

10. Angular gear according to Claim 1, **characterised in that** the first shaft (27) is a hollow shaft.

11. Angular gear according to Claim 1, **characterised in that** the first casing part (2) contains fastening holes (12) in at least one end side (8, 9).

12. Angular gear according to Claim 1, **characterised in that** the first casing part (2) is connected to the second casing part (3) via fitting means (47).

13. Angular gear according to Claim 2, **characterised in that** the fitting means are formed by an external bearing ring of a roller bearing (47), with which the second shaft (34) is rotatably disposed in the second casing part (3).

14. Angular gear according to Claim 1, **characterised in that** the bevel gear (1) has spur or spiral toothing.

15. Angular gear according to Claim 1, **characterised in that** the bevel gear wheel (35) of the second shaft (34) is a pinion.

16. Angular gear according to Claim 1, **characterised in that** the first and the second shaft (27, 34) are axially displaced relative to one another.

17. Angular gear according to Claim 1, **characterised in that** the axis of the first shaft (27) and the axis of the second shaft (34) lie in a common plane.

18. Angular gear according to Claim 1, **characterised in that** the first and the second shaft (27, 34) enclose an angle of 90° to one another.

## Revendications

1. Engrenage angulaire (1), comprenant
une première partie de carter (2) contenant un espace intérieur (18) ainsi qu'un perçage (46) latéral, s'étendant dans la direction radiale par rapport audit espace intérieur (18),
la première partie de carter (2) étant formée d'un tronçon de profilé extrudé de section transversale creuse, et l'espace intérieur (18) étant constitué de l'espace creux formé lors de l'extrusion,
un premier arbre (27) qui est monté tournant dans l'espace intérieur (18) et sur lequel une première roue dentée conique (29) est fixée de manière solidaire en rotation, ladite roue présentant un manchon (31) tubulaire qui est monté par frottement sur le premier arbre (27),
le premier arbre (27) étant monté dans un palier (23) associé à l'aide du manchon (31) tubulaire,
une deuxième partie de carter (3) qui contient un espace intérieur (36) et est fixée à la première partie de carter (2) de manière telle que son espace intérieur (36) se trouve dans l'alignement du perçage (46) latéral de la première partie de carter (2), et
un deuxième arbre (34) qui est monté tournant dans la deuxième partie de carter (3) et, à son extrémité montée dans la première partie de carter (2), porte une deuxième roue dentée conique (35), solidaire en rotation, qui engrène avec la première roue dentée conique (29).

2. Engrenage angulaire selon la revendication 1, **caractérisé en ce que** l'espace intérieur (18) de la première partie de carter (2) présente une forme cylindrique sur la majeure partie de sa longueur.

3. Engrenage angulaire selon la revendication 1, **caractérisé en ce que** des gorges (19, 21) sont aménagées dans l'espace intérieur (18), au niveau des deux extrémités frontales (8, 9) de la première partie de carter (2), aux fins de recevoir des joncs (24, 25).

4. Engrenage angulaire selon la revendication 1, **caractérisé en ce que**, perpendiculairement à l'axe longitudinal de l'espace intérieur (18), la première partie de carter (2) présente une section transversale qui est au moins approximativement rectangulaire.

5. Engrenage angulaire selon la revendication 1, **caractérisé en ce que** la première partie de carter (2) présente au moins une face (7) plane.

6. Engrenage angulaire selon la revendication 1, **caractérisé en ce que** la première partie de carter (2) comporte au moins une rainure (11) en contre-dépouille qui s'étend dans une paroi latérale (4, 5, 6) de ladite première partie de carter (2) et est parallèle à l'axe longitudinal de l'espace intérieur (18).

7. Engrenage angulaire selon la revendication 1, **caractérisé en ce que** le premier arbre (27) est monté dans des roulements à billes rigides à gorge profonde (22, 23).

8. Engrenage angulaire selon la revendication 7, **caractérisé en ce que** les roulements à billes rigides à gorge profonde (22, 23) sont des roulements à graissage permanent, rendus étanches.

9. Engrenage angulaire selon la revendication 8, **caractérisé en ce que** l'espace intérieur (18) de la première partie de carter (2) est rendu étanche uniquement par les joints des paliers (22, 23) pour le premier arbre (27).

10. Engrenage angulaire selon la revendication 1, **caractérisé en ce que** le premier arbre (27) est un arbre creux.

11. Engrenage angulaire selon la revendication 1, **caractérisé en ce que** la première partie de carter (2) comporte des trous de fixation (12) dans au moins une de ses faces frontales (8, 9).

12. Engrenage angulaire selon la revendication 1, **caractérisé en ce que** la première partie de carter (2) est liée à la deuxième partie de carter (3) par des moyens d'ajustement (47).

13. Engrenage angulaire selon la revendication 2, **caractérisé en ce que** les moyens d'ajustement sont constitués de la bague extérieure d'un palier à roulement (47), par lequel le deuxième arbre (34) est monté tournant dans la deuxième partie de carter (3).

14. Engrenage angulaire selon la revendication 1, **caractérisé en ce que** l'engrenage conique (1) présente une denture droite ou une denture hypoïde.

15. Engrenage angulaire selon la revendication 1, **caractérisé en ce que** la roue conique (35) du deuxième arbre (34) est un pignon.

16. Engrenage angulaire selon la revendication 1, **caractérisé en ce que** les axes du premier et du deuxième arbre (27, 34) sont décalés l'un par rapport à l'autre.

17. Engrenage angulaire selon la revendication 1, **caractérisé en ce que** l'axe du premier arbre (27) et l'axe du deuxième arbre (34) se situent dans un même plan.

18. Engrenage angulaire selon la revendication 1, **caractérisé en ce que** le premier et le deuxième arbre (27, 34) forment un angle de 90° entre eux.
